# EUROPEAN PATENT SPECIFICATION

(11) **EP 1 522 778 B1**
(45) Date of publication and mention of the grant of the patent: **02.12.2009**
(21) Application number: 05000849.9
(22) Date of filing: 25.10.2001
(51) Int. Cl.: F16K 31/08, F16K 7/16

(54) **Apparatus and method for controlling fluid flow**
Vorrichtung und Verfahren zur Steuerung einer Strömung
Appareil et procédé de régulation d'un fluide

(30) Priority: 25.10.2000 US 696154
(43) Date of publication of application: 13.04.2005
(62) Divisional of application: 01273871.2
(73) Proprietor: Arichell Technologies, Inc., West Newton, MA 02165 (US)
(72) Inventor: Parsons, Natan, E., Brookline MA 02146 (US); Herbert, Kay, Winthrop MA 02152 (US); Mo, Xiaoxiong, Lexington MA 02420 (US)
(74) Representative: Emde, Eric

(56) References cited:
- EP-A- 0 767 331
- US-A- 2 619 986
- US-A- 2 842 400
- US-A- 3 740 019
- US-A- 3 821 967
- US-A- 5 265 594
- US-A- 5 375 811
- US-A- 5 819 336

## Description

### BACKGROUND OF THE INVENTION

### Field of the Invention

The present invention relates to controlling fluid flow in various systems.

### Background Information

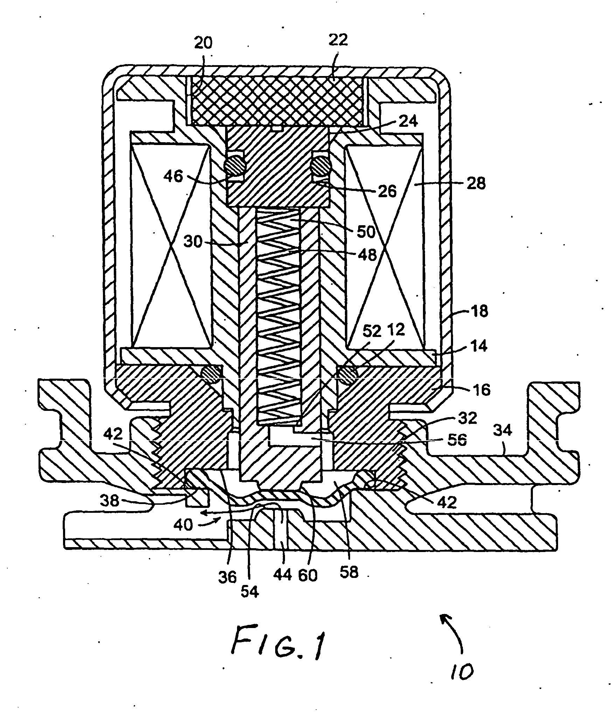

US Patent 5265594 discloses a solenoid valve for regulating the flow-through amount of a flowing medium such as a gas in a ventilator. The solenoid valve, shown in Fig. 1 of US Patent 5265594, provides a variable orifice operated by a first regulating circuit with negative feedback. The solenoid valve includes a housing containing a channel divided into an inlet and an outlet and a valve opening or orifice disposed between the inlet and the outlet. The valve also includes a membrane, consisting of a suitable type of rubber or similar material, seated so as to normally close the valve opening using a solenoid. The solenoid includes a magnetic coil is disposed below the membrane and a rod having a magnetic material in the region of the coil and being centrally displaceable within the magnetic coil. When there is no current flowing through the magnetic coil, the rod is pressed against the membrane by tension two springs, so that the valve opening is reliably closed.

EP-A-0767331 discloses a valve having a mechanically journalled movable means (e.g., a rod with a plunger) for regulating the valve's degree of opening. The movable means and bearings are made to move in relation to each other in order to reduce friction in the bearing of the movable means. The movable means is then in a position governed by the valve's prevailing degree of opening. In an electromagnetic valve, whose degree of opening is adjustable by a movable means in the mechanical bearing, a movement device is arranged to impart a relative movement to the movable means in an opening position determining the valve's prevailing degree of opening.

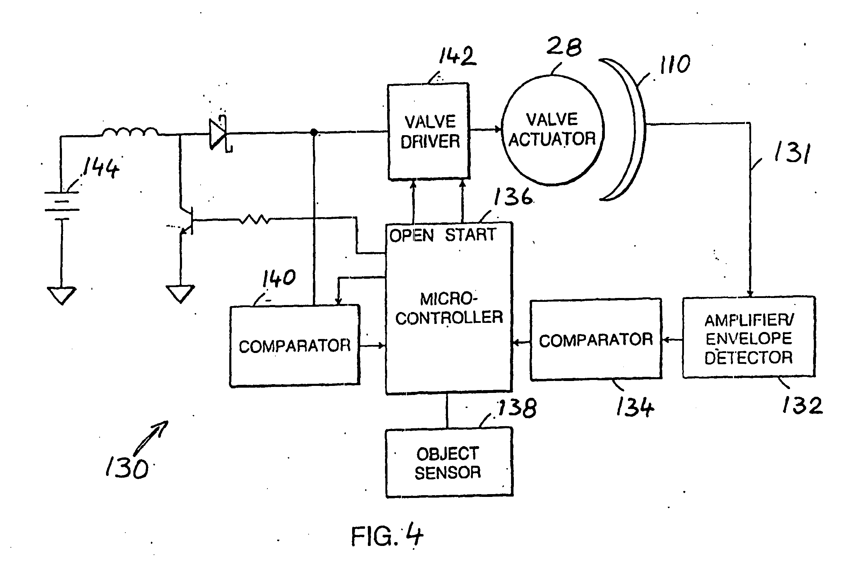

US Patent 3821987 discloses a battery operated fluid control system, which may be used in a sprinkler system having a master valve unit with a battery operated electronic clock, and being operable with one or more slave valve units connected in series to sequentially open the slave valves for their corresponding preset time duration. Figs. 4 - 6 of US Patent 3821967 show valve controlled by a solenoid operator. The main valve includes an inlet, an outlet, an anti-siphon valve body and a valve actuating member controlled by a solenoid. The solenoid is mounted on the side of the anti-siphon valve body and includes a closure member connected to a plunger. The closure member has an enlarged head including a molded rubber seal member arranged to interact with a valve seat of an actuator valve. The actuating member includes a pilot cavity located above a diaphragm. The pressure inside the pilot cavity is controlled by the solenoid displacing the molded rubber member of the actuator valve. The solenoid opens and closes the actuator valve thereby controlling the opening and closing of the main valve.

US Patent 2619986 discloses a readily dismemberable valve assembly for sanitary dispensation of fluid. The valve assembly is controlled by a solenoid actuator detachably affixed to a valve seat and including a valve seat closing means, such as a flexible rubber diaphragm and a flow regulating meter. When the diaphragm is located away from the valve seat, the fluid can flow from the valve input to the valve output, as shown in Fig. 1 of US Patent 2619986.

US Patent 2842400 discloses a diaphragm type solenoid delivery valve for dispensing carbonated beverages. The valve includes a valve body, having an inlet and an outlet, and a valve seat. The valve also includes a solenoid having a housing and a sleeve extending through the core of the solenoid coil and a solenoid plunger located inside the sleeve. A cup-shaped diaphragm has an annular flange surrounding the inner end of the sleeve and a thickened central portion. The solenoid plunger presses the diaphragm against the valve seat in the closed position and is retracted In the opened position, as shown in Figs. 6 and 7 of US Patent 2842400. The solenoid may be withdrawn from the valve body with the diaphragm attached to the sleeve.

US Patent 5375811 discloses magnetic-latching valve designed for either of the selected operating positions of a two-position design. The valve utilizes a generally toroidal magnetic circuit established by spaced inner and outer annular walls, which are connected at their axial ends, with an inlet-port fluid-flow connection at one end to the interior of the inner wall, and with an outlet-port fluid-flow connection from the interior of the inner wall. The inner wall has a gap between axially spaced first and second annular pole faces. A single electrical excitation coil is coupled to the magnet circuit at overlap with the inner annular wall on one side of the gap. A disc-shaped armature is compliantly supported for axially shuttled displacement in the gap In alternating abutment with one to the exclusion of the other of the pole faces. Fixedly mounted radially polarized means within the outer annular wall completes a magnet circuit to the outer wall via the periphery of the armature and one or the other of the pole faces, depending upon the shuttled position of the armature. The valve includes an on/off control of a port to-port flow designed having an annular valve seat radially located within one of the pole faces, in coaction with a valve member carried by the armature.

US Patent 5819336 discloses an apparatus for automatically controlling on-off operation of a battery-driven water rinsing system (afaucet and a sink). The system includes a water supply having electrically actuated actuation to cause water flow. The on-off operation is responsive to approach and withdrawal of a user of the faucet. The system includes a control circuit Including an infrared transmitter, an Infrared receiver, and control means. The transmitter transmits infrared energy to a user in the vicinity of the water rinsing system for reflection from the user to an infrared receiver which transmits electric signals to the control circuit and control means for controlling actuation of the water supply system. A visible light sensor is provided for generating an electrical current responsive to the presence of the user, and this generated current is disposed for energizing the control circuit.

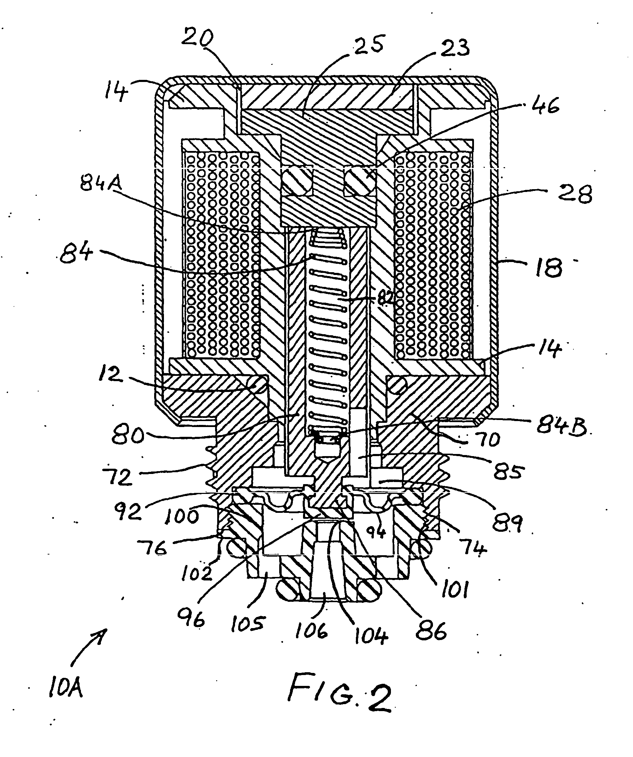

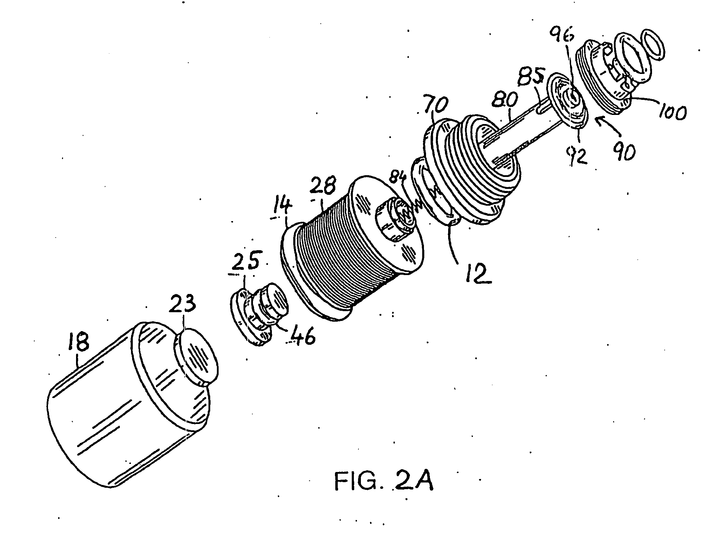

US Patent 3,740,019 disposes zero displacement diaphragm valve, which upon opening or closing does not displace any fluid in the system because the volume in the fluid line is maintained constant. The fluid valve includes an actuator disposed within an actuator chamber completely filled with an inert incompressible liquid and the actuator is connected to a diaphragm facing a valve seat chamber containing the fluid to be metered. The actuator is electromagnetically movable by a solenoid coil. The movement of the actuator results in flexing of the diaphragm so as not to alter the volume in the valve seat chamber as shown in Figs. 1 and 2 of US Patent 3,740,019. When the diaphragm is moved away from the chamber, its central portion closes the valve. Since the volume in the chamber will not change, the diaphragm will flex and accordingly the volume in the fluid line will not change. Thus, the fluid valve develops little or no pumping action when opening or closing.

Industrial, agricultural and household systems use various types of valves for controlling fluid flow. The most common form of electrically operated valve employs a solenoid wound onto a bobbin, and a valve member locates inside the bobbin and driven by a drive current passed through the solenoid, In a closed position, a tip of the valve member is pressed against a valve seat and thereby stop flow through a conduit in which the valve seat is disposed. Although the tip of the valve member is in many cases made of a synthetic resin or other resilient material, other parts of the valve member are made up of a material having relatively high-magnetic-permeability, such as steel, so that it will be subject to force from the solenoid's magnetic field and will act as a solenoid armature.

in battery-operated actuators, electric-valve-control circuitry should employ as little power as possible. To achieve highly energy efficient operation, the valve member (i.e., the solenoid's armature) needs to be as magnetically permeable as much as possible. Furthermore, the electric-valve-control circuitry should apply only the minimum drive current necessary and for the minimum-duration during the armature activation, in latching valves (i.e., valves whose actuators require power to open or close the valve but not to keep it opened or closed). In non-latching actuators, unnecessarily high drive current for holding the valve open also mary unnecessarily reduce the battery's longevity. Therefore, the reduction of energy consumption is an important aspect of an actuator design.

In many prior art actuators, water (or other fluid being regulated) can flow into the bobbin's cavity that contains the actuator. The actuator frequently includes a flow passage in communication with an internal void to provide a low-flow-resistance path and to compensate the external pressure onto the valve member (i.e., the pressure exerted by the regulated fluid onto the armature). Thus, the regulated fluid moves back and forth in response to closing or opening the actuator. This usually causes degradation of the armature (i.e., corrosion) and problems with metal and other ions (or other deposits) that accumulate within the bobbins cavity. The severity of this problem depends on the type of fluid, e.g., type of water, being regulated.

As mentioned above, an optimal armature of the solenoid has as high magnetic permeability as possible. However, materials with very high magnetic permeability have usually low corrosion resistance. Thus, designers in the past have had to compromise permeability for corrosion resistance. For example, carbon steel has a high magnetic permeability, but is quite vulnerable to rust and corrosion. Therefore, designers have resorted to the higher-magnetic-permeability grades of stainless steel, even though stainless steel is less magnetically permeable than carbon steel. Still, the designers have had problems with the above-described deposits, or conversely problems with preventing fluid contamination by the armature, bobbin or other valve elements.

Therefore, there is still a need for an improved valve actuator.

### SUMMARY OF THE INVENTION

The present invention relates to an actuator system according to claim 1.

According to one aspect, an electromagnetic actuator includes a solenoid coil and an armature housing constructed and arranged to form an armature pocket arranged to receive a ferromagnetic armature including a distal part. The actuator also includes a membrane secured with respect to the pocket and arranged to enclose at least partially the distal tip to seal armature fluid within the pocket, wherein displacement of the distal part of the armature displaces the membrane with respect to a valve passage controlled by the actuator.

According to another aspect, an electromagnetic actuator that includes a solenoid coil and an armature housing that forms an armature pocket within which a ferromagnetic armature is disposed. The actuator is operable by driving electric current through the solenoid coil to drive the armature between retracted and extended armature positions. The actuator includes a flexible membrane so secured at a mouth of the pocket as to deform outward when the armature travels to its extended armature position and as further to form with the armature housing a substantially fluid-tight armature chamber that includes the armature. A substantially incompressible fluid occupies substantially the entire chamber volume not occupied by the armature.

According to yet another aspect, a valve includes a conduit forming a fluid-flow channel providing a valve seat, and an electromagnetic actuator. The electromagnetic actuator includes a solenoid coil and an armature housing that forms an armature pocket within which a ferromagnetic armature is disposed. The actuator is operable by driving electric current through the solenoid coil to drive the armature between retracted and extended armature positions. The actuator also includes a flexible membrane so secured at a mouth of the pocket as to deform and so seal against the valve seat as to prevent fluid flow through the fluid-flow channel when the armature travels to its extended armature position, wherein the membrane and the armature housing form a substantially fluid-tight armature chamber that contains the armature. A substantially incompressible fluid occupies substantially the entire chamber volume not occupied by the armature. The actuator includes a permanent magnet arranged to form a latching actuator. The actuator includes a bias spring positioned and arranged to biases said armature toward its extended position.

Preferred embodiments of these aspects include one or more of the following features. The distal part of the armature (i.e. armature tip) may be arranged to compress the membrane against a valve seat when the armature is disposed in its extended armature position. A ratio that the area of the distal part bears to the area of the membrane exposed to a conduit upstream of the membrane is between 1.4 and 12.3.

The armature fluid may include incompressible fluid comprising a corrosion inhibitor. The incompressible fluid may consist essentially of water mixed with a corrosion inhibitor.

According to yet another aspect, an actuator system includes an actuator including an armature and a coil operable by application of a coil drive and thereby displace the armature, and a membrane partially enclosing the armature. The actuator system also includes an armature sensor constructed to detect displacement of the armature; and a control circuit operable to begin applying coil drive to the coii in response to an output from the armature sensor.

According to yet another aspect, an actuator system includes a actuator including an armature, a membrane, and a coil operable by application of a coil drive thereto in a first drive direction to conduct current in a first current direction and thereby tend to drive the armature to a first end position; a sound sensor so coupled to the actuator as to sense sound made by the armature in reaching the first end position, the sound sensor generating a sensor output indicative of the sound that it senses. The system also includes
a control circuit operable to begin applying coil drive to the coil in the first drive direction and responsive to the sensor output's meeting a predetermined first current-termination criterion to stop applying coil drive to the coil in the first drive direction.

Preferably, in this embodiment, the coil is operable by application of a coil drive thereto in a second drive direction to conduct current in a second current direction and thereby tend to drive the armature to a second end position; the sensor is so coupled to the actuator as to sense the armature reaching the second end position; and the
control circuit is operable to begin applying coil drive to the coil in the second drive direction and responsive to the sensor output meeting a predetermined second current-termination criterion to stop applying coil drive to the coil in the second drive direction.

The actuator may include the first and second current-termination criteria differ.

The present design reduces the energy waste that usually occurs in driving the actuator's armature. An armature sensor monitors the armature movement or determines when the armature has reached the end of its travel. At a selected point, based on a signal from the armature sensor, a drive signal to the actuator-coil drive ends. This can reduce energy consumption greatly, because coil-drive duration thereby does not always need to be long enough to meet worst-case requirements usually applied when there is no armature sensor. This can result in a significant battery-iongevity increase.

According to another aspect, the valve actuator can use materials with a high magnetic permeability such as the ferromagnetic types of stainless steel regardless of their low corrosion-resistivity and the armature does not need to be subjected to a number of treatment steps to afford an acceptable level of corrosion resistance. Thus, the present design reduces to valve cost, or reduces the greater solenoid-wire size required because the armature's permeability is not as great as optimally possible.

In one preferred embodiment, we secure a flexible membrane over the end of the pocket in which the armature travels as to protect the armature's high-permeability material from exposure to the possibly corrosive fluid whose flow the valve is to control. Furthermore, we fill the armature pocket with an incompressible fluid so as to counterbalance the force exerted by the controlled fluid's pressure.
We improve various prior art designs, for example by eliminating various problems such as that of U.S. Patent No. 5,941,505 to Nagel to prevent leaks in membranes that protect the controlled fluids from valve-assembly contaminants.

### BRIEF DESCRIPTION OF THE DRAWING

Fig. 1 is a cross-sectional view of an electrically operated valve actuator.
Fig. 2 is a cross-sectional view of another embodiment of an electrically operated valve actuator.
Fig. 2A is an exploded view of the operator shown in Fig. 2.
Fig. 3 is a cross-sectional view of the operator shown in Fig. 2 including a piezoelectric transducer.
Fig. 4 is a block diagram of a control system for the actuator.

### DETAILED DESCRIPTION OF AN ILLUSTRATIVE EMBODIMENT

Referring to Fig. 1, industrial, agricultural and household systems use various types of valves for controlling fluid flow. An electrically operable valve 10 uses a solenoid to drive a plunger into a valve seat and thereby stop flow through a conduit in which the valve seat is disposed. Specifically, valve actuator 10 includes an actuator base 16, a ferromagnetic pole piece 24, a ferromagnetic armature 30, slideably mounted in an armature pocket formed in pole piece 24, and a solenoid windings 28 wound about a solenoid bobbin 14. Valve 10 also includes a resiliently deformable O-ring 12 that forms a seal between solenoid bobbin 14 and actuator base 16, all of which are held together by a housing 18. At its upper end, bobbin 14 forms a magnet recess 20 formed for a disk-shaped magnet 22. Solenoid housing 18 (i.e., can 18) is crimped at actuator base 16 to hold magnet 22 and pole piece 24 against bobbin 14 and thereby secure windings 28 and actuator base 16 within can 18.

Valve actuator 10 is constructed as latching (shown in Fig. 1). The latching embodiment includes magnet 22 providing magnetic field having orientation and force sufficient to overcome the force of a coil spring 48 and thereby retain armature 30 in the open state even after there is no drive current flowing in the solenoid's windings 28. A drive current is applied to windings 28 in opposite directions to move armature 30 between the open and closed states, but no drive current is necessary to maintain either state.

Referring still to Fig. 1, actuator base 16 includes a wide base portion substantially located inside can 18 and a narrowed base extension 32. The valve actuator also includes a resiliently deformable membrane 40having a shoulder 42. The outer surface of base extension 32 threadedly engages complementary threads provided by a recess that a mounting block 34's upper surface forms. An annular surface 36 formed by a counterbore in the base extension 32's lower face squeezes a thickened peripheral rim 38 of resiliently deformable membrane 40 against shoulder 42 formed in the mounting block 34's upper recess. This creates a fluid-tight seal so that the membrane protects the armature 30 from exposure to fluid flowing in mounting block 34's interior fluid conduit 44. It also cooperates with an O-ring seal 46 to form a fluid-tight armature chamber filled with an armature fluid (i.e., liquid or gas) that preferably is relatively inviscid, non-compressible and non-corrosive.

For example, the armature liquid may be water mixed with a corrosion inhibitor, e.g., a 20% mixture of polypropylene glycol and potassium phosphate. Alternatively, the armature fluid may include silicon-based fluid, polypropylene polyethylene glycol or another fluid having a large molecule. The armature liquid may in general be any substantially non-compressible liquid having low viscosity and non-corrosive properties with respect to the armature. Because of this protection, the illustrated embodiment's armature material can be a low-carbon steel; corrosion resistance is not as big a factor as it would otherwise be. Other embodiments may employ armature materials such as the 420 or 430 series stainless steels. It is only necessary that the armature consist essentially of a ferromagnetic materials, i.e., a material that the solenoid and magnet can attract. Even so, it may include parts, such as, say, a flexible tip, that are not ferromagnetic.

In operation, coil spring 48 disposed in the armature 30's central cavity 50 bears against a cavity shoulder 52 and thereby tends to urge armature 30 to an extended position from the retracted position shown in Fig. 1. In the latching embodiment shown in Fig. 1, armature 30 is held in the retracted position by magnet 22 in the absence of a solenoid current. To drive the armature to the extended position therefore requires armature current of such a direction and magnitude that the resultant magnetic force counteracts that of the magnet by enough to allow the spring force to prevail. When it does so, the spring force moves the armature 30 to its extended position, in which it causes the membrane 40's exterior surface to seal against a valve seat 54 that the mounting block 34 forms in the conduit 44. This stops flow in the conduit 44. In this position, the armature is spaced enough from the magnet that the spring force can keep the armature extended without the solenoid's help.

Resilient membrane 40 encloses armature fluid located a fluid-tight armature chamber in communication with an armature port 56 formed by the armature body. Furthermore, resilient membrane 40 is exposed to the pressure of regulated fluid in conduit 44 and may therefore be subject to considerable external force. However armature 30 and spring 48 do not have to overcome this force, because the conduit's pressure is transmitted through membrane 40 to the incompressible armature fluid within the armature chamber. The force that results from the pressure within the chamber therefore approximately balances the force that the conduit pressure exerts.

Referring still to Fig. 1, armature 30 is free to move with respect to fluid pressures within the chamber between the retracted and extended positions. Armature port 56 enables the force-balancing fluid displaced from the armature chamber's lower well 58 through the spring cavity 50 to the part of the armature chamber from which the armature's upper end (i.e. distal end) has been withdrawn upon actuation. Although armature fluid can also flow around the armature's sides, arrangements in which rapid armature motion is required should have a relatively low-flow-resistance path such as the one that port 56 helps form. Similar considerations favor use of an armature-chamber liquid that is relatively inviscid.

To return the armature to the illustrated, retracted position and thereby permit fluid flow, current is driven through the solenoid in the direction that causes the resultant magnetic field to reinforce that of the magnet As was explained above, the force that the magnet 22 exerts on the armature in the retracted position is great enough to keep it there against the spring force. But the armature in a monostable version, which employs no such magnet, would remain in the retracted position only so long as the solenoid conducts enough current for the resultant magnetic force to exceed the spring force.

In short, membrane 40 protects armature 30 and creates a cavity that is filled with a sufficiently non-corrosive liquid, which in turn enables actuator designers to make more favorable choices between materials with high corrosion resistance and high magnetic permeability. Furthermore, membrane 40 provides barrier to metal ions and other debris that would tend to migrate into the cavity.

In the illustrated embodiment the armature 30's lower end forms a narrowed tip portion 60 (i.e., plunger) having a surface that is touching membrane 40, which in turn comes in contact with seat 54. The plunger surface is related to the seat opening area, both of which can be increased or decreased. The plunger surface and the seat 54's surface can be optimized for a pressure range at which the valve actuator is designed to operate. Reducing the plunger surface (i.e., narrowing tip portion 60) reduces the plunger area involved in squeezing membrane 40 against seat 54, and this in turn reduces the spring force required for a given upstream fluid-conduit pressure. On the other hand, making the plunger tip area too small tends to damage membrane 40 during valve closing over time. We have found that an optimum range of tip-contact area to seat-opening area is between 1.4 and 12.3. The present actuator is suitable for variety of pressures of the controlled fluid, including pressures about 10.34 Bars (150 psi). Without any substantial modification, the valve actuator may be used in the range of about 2.07 Bars (30 psi) to 5.52 Bars (80 psi), or even water pressures of about 125 psi.

Figs. 2 and 2A illustrates another embodiment of an electrically operable valve. Valve actuator 10A Includes a magnet 23, a ferromagnetic pole piece 25, a ferromagnetic armature 80, slideably mounted in an armature pocket formed in pole piece 25, and an actuator base 70. Valve 10A also includes solenoid windings 28 wound about solenoid bobbin 14, resilient membrane 90 and a pilot body member 100. Resiliently deformable O-ring 12 forms a seal between solenoid bobbin 14 and actuator base 70. all of which are held together by actuator housing 18. Bobbin 14 forms recess 20 formed for a distal end of pole piece 25 and disk-shaped magnet 23. Housing 18 is crimped at actuator base 70 to hold magnet 23 and pole piece 25 against bobbin 14 and thereby secure windings 28 and actuator base 70 together. Similarly as valve actuator 10. valve actuator 10A is constructed as latching (shown in Fig. 2).

Referring still to Figs. 2 and 2A, actuator base 70 includes a wide base body in contact with bobbing 14, crimped inside can 18, and a narrowed base extension. The narrowed base extension of actuators base 70 includes external threads 72 and internal threads 74. Internal threads 74 are made to fit complemetal external threads 101 of a pilot body member 100 to engage a resiliently deformable membrane 90.

Resiliently deformable membrane 90 includes an outer ring 92. compliant region 94, and a resilient, C-shaped region 95. Membrane 90 may be an EDPM diaphragm or another type of diaphragm. In general, deformable membrane 90 and region 96 may have various shapes and sizes, depending on the arrangement and size of pilot body member 100 and a plunger 86 of armature 80. Deformable membrane 90 is made of a curable material and may at least partially be made of an elastic material. Furthermore, the material of deformable membrane 90 is selected to resist possible degradation caused by fluid regulated in pilot body member 100. Therefore, the same valve actuator can be fabricated for various industrial, agricultural applications, while only deformable membrane 90 and pilot body member 100 are specifically designed for the regulated fluid. In medical applications, membrane 90 and pilot member 100 are sterilized or may be made of disposable material. Therefore, the valve actuator may be reused with new disposable elements.

Ferromagnetic armature 80 includes tip portion 86 (i.e., plunger 86) and a spring cavity 82 arranged to receive spring 84, having tapered end portions 84 A and 84B. The tapered spring ends enable machine sorting and assembly. Ferromagnetic armature 80 also includes a passage 85 enabling fluid communication between cavity 82 and a chamber 89 sealed by O-ring seal 46 and membrane 90. This again creates a fluid-tight seal for the armature liquid, wherein membrane 90 protects armature 80 from exposure to external fluid located in contact with pilot body member 100. As mentioned above, the armature liquid preferably has a very low viscosity and is non-compressible and non-corrosive. Furthermore, bobbin 14, pole piece 25, armature 80 and passage 85 enable a relatively unobstructed flow of the sealed armature fluid as the actuator moves, i.e., there is a low-resistance path for the armature fluid.

The actuator assembly includes pilot body member 100 reproducibly secured to the operator assembly, which provides numerous advantages. Specifically, pilot body member 100 includes external threads 101, which engage complementary threads 74 in pole piece 70, and a flange 102. Flange 102 butts against a shoulder portion 76 of pole piece 70 providing a positive stop to the pilot body member's being screwed onto the operator assembly. This positive stop provides a known, substantially constant distance and geometry between an external surface of resilient portion 96 and a valve seat 104. The known, substantially constant distance and geometry in turn assures reproducible closing and opening action of the valve member.

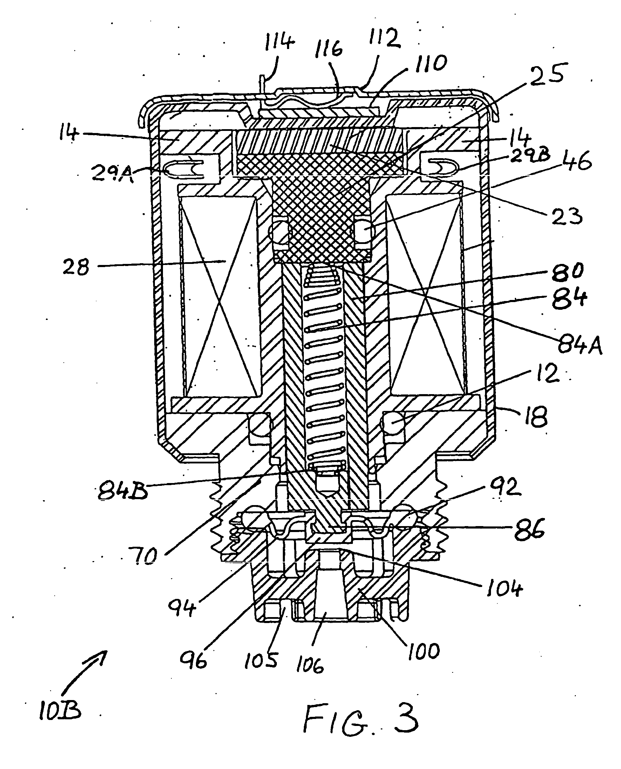

In general, during field maintenance or replacement, the valve actuator or other elements may be removed or replaced, which in turn may cause a change in the distance and geometry between valve seat 104 and element 96 of the valve actuator. Furthermore, various piece-part tolerances and O-ring deformability may result in some variability in the position of the pilot body's central tube 106 with respect to resilient member 96. This variability can cause resultant variability in the valve operation or during the open and close times. On the other hand, the pilot-valve and seat spacing and geometry is set when pilot member 100 is preassembled onto the valve operator, as shown in Figs. 2 and 3.

In the closed position, resilient portion 86 seals the opening at valve seat , 104, and thus prevents fluid flow from a pilot passage 105 to a pilot passage 106. Pilot body member 100 may be coupled to a diaphragm via pilot passages 105 and 106. This, the use or pilot body member 100 is a noval improvement of the operation of diaphragm-controlled flush valves, for example, disclosed in U.S. Patents 5,125.621; 5.195.720; 5,196,118; and 5,244,179. Furthermore, several diaphragms may be cascaded together, wherein passages 105 and 106 are connected to a first smaller diaphragm, which in turns controls a second larger diaphragm that enables flow of a large amount of fluid pass the diaphragm in its open state. These two diaphragms linked together create an amplification effect for effectively controlling fluid flow by a diaphragm.

FIG. 3 illustrates another embodiment of the valve actuator. Vale actuator 10B includes coil28 wound on bobbin 14, and actuator base 70 mounted inside an actuator housing 18. The latching version of valve actuator 10B includes latching magnet 22,ferromagnetic pole piece 25, and a ferromagnetic armature 80 slideably mounted in an armature pocket formed in pole piece 25. Resiliently deformable O-ring 12 forms a seal between solenoid bobbin 14 and actuator base 70, and O-ring 46 forms a seal between pole piece 24 and solenoid bobbin 14. Bobbin 14 forms recess 20 shaped for a distal end of pole piece 25 and disk shaped magnet 23. Valve actuator 10B also includes a position sensor such as a piezoelectric transducer 110 located within sensor housing 112. As described above, these actuator elements are crimped inside solenoid housing 18.

Referring still to Fig. 3, valve actuator 10B also includes resiliently deformable membrane 90 located between actuator base 70 and pilot body member 100. As described above, actuator base 70 includes a wide base body in contact with bobbing 14, and a narrowed base extension. The narrowed base extension of actuator base 70 includes external threads 72 and internal threads 74. Pilot body member 100 includes external threads 101, which engage complementary internal threads 74, and flange 102. (Alternatively, actuator base 70 and pilot body member 100 may be connected by other types of locking mechanisms.) Flange 102 butts against a shoulder portion 76 of pole piece 70 providing a positive stop to the pilot body member's being screwed onto the operator assembly. This positive stop again provides a known, substantially constant distance and geometry between an external surface of resilient portion 96 and a valve seat 104.

As described above, resiliently deformable membrane 90 includes outer ring 92, compliant region 94, and resilient, C-shaped region 96. There are various possible shapes and sizes of deformable membrane 90 and region 96, depending on the arrangement and size of pilot body member 100 and plunger 86.

Ferromagnetic armature 80 includes plunger 86 and a spring cavity 82 arranged to receive spring 84, having tapered end portions 84 A and 848. The tapered spring ends enable machine sorting and assembly. Plunger 86 may have a circular, elliptical, rectangular or another cross-section. Ferromagnetic armature 80 also includes a passage 85 (shown in Fig. 2A) enabling fluid communication between cavity 82 and a chamber 89 sealed by O-ring seal 46 and membrane 90. This again creates a fluid-tight seal for the armature liquid, wherein membrane 90 protects armature or and plunger 86 from exposure to external fluid located in contact with pilot body member 100. That is, the entire armature 80 surrounded by the armature liquid that has substantially equilibrated pressure being applied to the armature surface (i.e., armature 80 substantially "floats" in the armature liquid). As mentioned above, the armature liquid preferably has a very low viscosity and is non-compressible and non-corrosive. Furthermore, bobbin 14, pole pieces 25 and 70, armature 80 and passage 85 enable a relatively unobstructed flow of the armature fluid as the actuator moves, i.e., there is a low-resistance path for the armature fluid.

Advantageously, the actuator assembly includes pilot body member 100 reproducibly secured to the operator assembly, as described above. Flange 102 butts against a shoulder portion 76 of pole piece 70 providing a positive stop that provides a known, substantially constant distance and geometry between an external surface of resilient portion 96 and a valve seat 104. The known, substantially constant distance and geometry in turn assures reproducible closing and opening action of the valve member. Furthermore, pilot body member 100 may be shaped to receive a diaphragm.

FIG. 4 is a partially schematic and partially diagrammatic illustration of a control circuit used for valve actuator 10C. Control circuit 130 includes a sensor amplifier and envelope detector 132, a comparator 134, a microcontroller 136 receiving signal from an object sensor 138, a comparator 140 and a valve driver 142. To close the valve, valve driver 142 applies a drive voltage, e.g., through terminals 29A and 29B. to pass a drive current through coil 28, as described in U.S. Patents 6,293,516 and 6,305,662.

In general, the valve actuator may use different types of control circuits such as the circuits described in U.S. Patents 5,781,399; 5,803,711; 5,815,365; or 6,021,038. The drive current induces the corresponding magnetic flush guided largely by ferromagnetic housing 18, rear pole piece 25, and front pole piece 70. In the latching embodiment, the drive voltage's polarity is such that the resultant magnetic flux opposes that of the permanent magnet 23. This breaks the magnet 23's hold on armature 80 and allows return spring 84 to urge plunger 86 together with membrane portion 96 onto valve seat 104. Once the valve has thus closed, the return spring keeps it closed without any further assistance from coil 28. In the closed state, the magnetic force by magnet 23 on armature 22 is less than that of return spring 84 due to the armature 22's increased distance from magnet 23.

To open the valve, valve driver 142 applies drive voltage in the opposite direction so the resultant magnetic flux has the same orientation as the flux from magnet 23. Thus, the applied magnetic flux reinforces that of the permanent magnet 18 and overcomes the force of return spring 84. Therefore, armature 80 moves toward magnet 23, and in the retracted position of plunger 86, the permanent magnet 23 's force is great enough to hold armature 80 against the return spring 84's force without applying any "hold" drive current.

Because of the latching valve's bistable nature, control circuits that operate it typically discontinue current flow after the valve has reached the desired state. Since the time required for the valve to reach the desired state can vary widely, conventional central circuits make the current-flow duration relatively long so that it will be adequate for worst-case conditions. Since most actuations are not performed under worst-case circumstances, though, coil drive typically continues for some time after the valve reaches its stable position. This is a waste of battery energy. To reduce this waste, control circuit 130 can monitor the armature to determine whether the armature has reached its endpoint, and it stops applying coil drive just before or when that occurs.

In general, to monitor position of plunger 86, valve actuator 10B includes a position sensor that may be a piezoelectric transducer, a capacitive transducer, an inductive transducer, an optical transducer, or any other transducer directly or indirectly coupled armature 80. For example, piezoelectric transducer 110 monitors location of armature 80 by taking advantage of the sound that armature 80 makes when it reaches either end of its travel. We use the term sound here in the broad sense of a pressure or strain wave. In most embodiments, moreover, the predominant frequency components of the "sound" are typically above the audible range.

In the illustrated embodiment of Fig. 3, the armature sensor is piezoelectric transducer 110 that responds to vibrations in the housing wall. The piezoelectric element 110's size and shape have typically been so chosen as to maximize its response to the predominant frequency components, and it normally is mounted in a location where the sounds to be detected are greatest in amplitude or most distinguishable from noise. Alternatively, the armature sensor is a capacitive sensor that includes one plate located on a stationary actuator surface and the other plate located on a surface of moving armature 80. The movement of armature 80 causes relative displacement of the two capacitor plates, which in turn changes the measured capacitance value. Based on the capacitance value, the capacitive sensor determines the end position or any instantaneous position of armature 80 (and thus the position of plunger 86).

Alternatively, the armature sensor is an optical sensor that includes an optical source and an optical detector. The source emits optical radiation that is reflected from (or possibly transmitted through) a surface of the armature and detected by the detector. The reflection surface modifies the emitted optical signal. Thus, the detected signal varies depending on the position of the armature (i.e., instantaneous location of plunger 86). Based on the detected optical signal, the optical sensor determines the end position or any instantaneous position of armature 80. Alternatively, the armature sensor uses a source of electromagnetic radiation and a corresponding detector. The detector measures perturbation of the generated electromagnetic radiation by the armature depending on the location of the armature. Based on the detected perturbed radiation, the sensor determines the end position or any instantaneous position of the armature.

Referring again to Fig. 3, a terminal 114 provides electrical communication to one of the transducer 110's electrodes through a contact spring 116 secured in place for example by a plastic cap 112. The other electrode of transducer 110 may be shared with coil 28, e.g., if the transducer is secured to the housing 18 by conductive bonding between the housing and that electrode.

Referring to Fig. 4, piezoelectric sensor 110 provides a sensor signal 131 to amplifier and envelope detector 132, which includes an amplifier tuned to the expected sound's predominant (typically ultrasonic-range) frequency components. Amplifier and envelope detector 132 rectifies the resultant filtered signal, and lowpass filters the result to produce an output representative of the tuned-amplifier output's envelope. When armature 80 reaches an endpoint and causes housing vibration, the resultant envelope value exceeds a threshold that a comparator 134 applies. Since in the illustrative embodiment the sonic amplitude is higher when the valve opens than when it closes, a microcontroller 136 sets a comparator threshold whose value when the valve is being opened is different from the value it has when the valve is being closed.

Microcontroller 136 may operate the valve actuator in response to a trigger Microcontroller 136 may operate the valve actuator in response to a trigger signal from an object sensor 138. Control circuit 130 can be constructed to operate with different types of object sensors that detect presence or motion. For example, object sensor 138 may be an ultrasonic sensor, a capacitive sensor, or an optical sensor such as any one of the sensors described in U.S. Patents 5,984,262; 6,127,671; or 6,212,697.

According to one embodiment, object sensor 138 is an optical sensor described in U.S. Patent 6,212,697. The optical sensor includes a light source and a light detector. The light source (e.g., an infrared LED) is disposed behind a lens having a generally circular portion of its optically useful pert. The source lens forms rear surface that is spherically convex, having a 16 mm (0.63 inch) radius of curvature and a peripheral edge that defines a plane normal to a line that extends downward to the right at an angle of 18.6 degrees with the horizontal. The lens's front, exit surface is also spherically convex, having a 50.8 mm (2.0 inch) radius of curvature and a peripheral edge that defines a plane normal to a line that extends downward to the left at an angle of 9.8 degrees with the horizontal. The source is positioned to provide a radiation pattern described and shown in U.S. Patent 8,212,697. The radiation detector (e.g., a photodiode) is located behind a receiver lens having shapes of left and right faces the same as those of the transmitter lens' corresponding surfaces. The receiver lens surfaces collect light received from a target (e.g., a person in front of a urinal) and tend to direct it toward the radiation detector. This arrangement is responsible a receiver pattern also described and shown in U.S. Patent 8,212,697.

For example, upon receiving a trigger signal from object sensor 138, microcontroller 136 may provide an "open" signal to valve driver 142, when the sensor detects user's leaving the flusher's vicinity. Furthermore, microcontroller 136 may provide a "close" signal after the valve has been open for a predetermined duration. To open the valve, the microcontroller sets an OPEN signal applied to a valve-driver circuit 142. This causes that circuit to drive current through the actuator 28's coil in the direction that wall cause the valve to open.

When that current starts flowing, comparator 134's output initially indicates that amplifier 132's output is less than the threshold, so the amplifier is not receiving sound of a magnitude consistent with the armature's reaching the end of its travel. The microcontroller 136 therefore keeps the OPEN signal asserted. But comparator 134's output changes in response to the sound made by the armature 80 at the end of its travel. When armature 80 has reached that point, the valve will stay open without current flow, so the microcontroller de-asserts its OPEN output and thereby causes the valve driver 142 to stop applying drive current to actuator coil 28. The result usually is that the current-flow duration has been much less than the time required to open the valve under worst-case conditions, so the system has saved considerable energy.

To close the valve, the microcontroller 136 asserts its CLOSE output and thereby causes the valve driver 142 to apply the drive signal to actuator coil 28 in the opposite direction. Again, the microcontroller allows current flow only until comparator 134 informs it that the armature has reached the end of its travel.

Control circuit 130 can be used to control not only the drive signal's duration but also its magnitude. The drive signal duration may be in the range of less than about 1 msec to about 10 msec, and preferably in the range of 1.5 msec to 8 msec. A coil-drive level high enough for ordinary operation may occasionally be inadequate, and the coil-drive level can be increased if the armature fails to reach the endpoint. One way to increase the coil-drive level is to increase the voltage on capacitors discharged through the actuator coil.

FIG. 4 depicts the valve driver 142 as being powered by a battery 144. The valve driver 140 typically includes energy-storage capacitors, which the battery 144 charges up between actuations through an inductor L1 and a Shottky diode D1. When the microcontroller 136 asserts its OPEN or CLOSE signal, the driver discharges the capacitors through actuator coil 28. Ordinarily, it is the voltage of battery 144 itself that determines the voltages to which the capacitors will be charged, and this in turns determines coil current and thus armature force.

Under some conditions, various factors (e.g., element expansion due to high temperature, high actuator fluid viscosity due to low temperature, degradation of membrane 90 or other actuator elements) may make it harder than usual to displace armature 80. However, the drive signal is normally set at normal operation values. Otherwise, energy consumption would be unnecessarily high if, during normal operation, the battery voltage were set high enough to deal with such more-difficult circumstances. The present embodiment therefore uses a battery-voltage level that is adequate for normal situations, but not for more-difficult ones.

Control circuit 130 is constructed to increases the capacitor voltage if the armature has not moved after initial application of drive signal, or has not reached the end of its travel within predetermined maximum current-flow duration. Specifically, microcontroller 136 turns the valve driver off temporarily when the predetermined maximum current-flow duration is reached, and it begins to pulse a transistor Q1 through a current-limiting resistor R1. During each pulse, the transistor draws current from the battery through inductor L1. Because of diode D1, though, it does not discharge the valve driver's capacitors. At the end of each pulse, transistor Q1 turns off, and the resultant electromotive force in inductor L1 causes current to continue to flow and thereby charge the drive circuit's capacitors through diode D2 even if those batteries' voltage exceeds that of the battery 144. So those capacitors can be charged to voltages that exceed the battery's.

To achieve the appropriate capacitor voltage, a comparator 140 compares the capacitor voltage to a level that microcontroller 136 sets. In response to the comparator's resultant output, microcontroller 136 increases the pulses' duty cycle if the capacitor voltage is less than the threshold, and it decreases their duty cycle if the capacitor voltage exceeds the threshold. The threshold is set higher than the battery voltage, so the force on the armature is greater and more likely to open or close the valve when the microcontroller then turns the valve driver on again.

The illustrative embodiment is only one of many that can employ the present invention's teachings. For example, although we prefer to use a sonic sensor--in particular, an ultrasonic transducer-other ways of detecting the end of armature travel can be used instead. Also, although the illustrated embodiment controls coil-drive duration both when the valve is being opened and when it is being closed, some embodiments may control that duration only during opening or only during closing. And latching-actuator systems that operate mechanisms other than valves can also benefit from the present invention's teachings.

Moreover, although we have employed a sample amplitude criterion to determine whether the armature has reached the end of its travel, other criteria may be found preferable for some application. For instance, the sonic signal could be sampled and compared by signal processing with a stored waveform known to be characteristic of the armature's reaching one of its endpoints. The stored signal may be different for different endpoints, and there may be circumstances in which it will be considered valuable to use such a comparison to distinguish between the actuators two states.

Any of the above-described valve actuators is suitable for numerous applications. For example, the described valve actuator can be used in a two-fluid valve described in U.S. Application Ser. No. 718,026 filed on November 20, 2000, Alternatively, the valve actuator can be used in a fluid dispensing system described in U.S. Patent 6,161,726 or PCT Application PCT/US99/30898 (published as WO 00/38561). Furthermore, the valve actuator can be used in various irrigation system used in agriculture or gardening.

Having described various embodiments and implementations of the present invention, it should be apparent to those skilled in the relevant art that the foregoing is illustrative only and not limiting, having been presented by way of example only. The functions of any one element may be carried out in various ways in alternative embodiments. Also, the functions of several elements may, in alternative embodiments, be carried out by fewer, or a single, element.

## Claims

1. An actuator system comprising:
an electromagnetic actuator including an armature housing (14, 16, 70) constructed and arranged to receive a ferromagnetic armature (30, 80) within an armature pocket and including a solenoid coil (28) operable by application of a coil drive and thereby linearly displace said armature;
a membrane (40, 90) secured with respect to said armature housing and arranged to enclose at least partially a distal part of said armature, said membrane constructed to seal armature fluid within said armature pocket thereby said entire armature being surrounded by said armature fluid, wherein displacement of said distal part displaces said membrane with respect to a valve passage (44, 106) controlled by said actuator;
a permanent magnet (22, 23) mounted stationary with respect to said housing and a bias sparing (48, 84) positioned and arranged to bias said armature toward its extended position closing said valve passage, said permanent magnet and said spring being assembled to provide a latching bistable arrangement for said armature;
an armature sensor constructed to detect displacement of said armature; and
a control circuit (130), powered by a battery (144), constructed to apply said coil drive to said coil in response to an output from said armature sensor,
wherein said control circuit is constructed to apply said coil drive to said coil in a first direction to displace said armature to a first end position and being responsive to an output from said sensor meeting a predetermined first current-termination criterion to stop applying coil drive to the coil in the first drive direction, and wherein, if the sensor output does not meet the first current-termination criterion within a predetermined first drive duration after the control circuit begins application of coil drive to the coil in the first drive direction, the control circuit applies coil drive to the coil in the first drive direction at a level higher than that at which it began application of coil drive to the coil.

2. The actuator system of claim 1 wherein said armature fluid includes incompressible fluid comprising a corrosion inhibitor.

3. The actuator system of claim 1 wherein said armature fluid includes an incompressible fluid consists essentially of water mixed with a corrosion inhibitor.

4. The actuator system of claim 1 wherein said distal part of the armature is arranged to compress said membrane against a valve seat (54, 104) when closing said valve passage while said armature is disposed in its extended armature position.

5. The actuator system of claim 4 wherein a ratio that the area of said distal part bears to the area of said membrane exposed to a conduit upstream of the membrane is between 1.4 and 12.3.

6. The actuator system of any one of the above claims, wherein said armature includes a central cavity (50, 82).

7. The actuator system of claim 6, wherein said central cavity is constructed and arranged for receiving said bias spring.

8. The actuator system of any one of the above claims wherein said control circuit includes a microcontroller (136).

9. The actuator system of claim 8 wherein said control circuit includes a comparator (134, 140) constructed to provide a signal to said microcontroller.

10. The actuator system of claim 1 wherein said control circuit is constructed to apply said coil drive to said coil in a second direction, being opposite to said first direction, and thereby tend to drive the armature to a second end position; said sensor is so coupled to the actuator as to sense said armature reaching the second end position; and said control circuit is operable to begin applying coil drive to the coil in the second drive direction and responsive to said sensor output meeting a predetermined second current-termination criterion to stop applying coil drive to said coil in the second drive direction.

11. The actuator system of claim 10 wherein the first and second current-termination criteria differ.

12. The actuator system of claim 10 wherein, if the sensor output does not meet the second current-termination criterion within a predetermined second drive duration after the control circuit begins application of coil drive to the coil in the second drive direction, the control circuit applies coil drive to the coil in the second drive direction at a level higher than that at which it began application of coil drive to the coil.

13. The actuator system of any one of claims 1 through 9 wherein said armature sensor includes a piezoelectric transducer (110).

14. The actuator system of any one of claims 1 through 9 wherein said armature sensor includes an optical sensor.

15. The actuator system of any one of claims 1 through 9 wherein said armature sensor includes a detector of electromagnetic radiation.

16. The actuator system of claim 1 through 9 wherein said control circuit is operatively connected to an object sensor (138).

17. The actuator system of claim 16 wherein said object sensor includes a motion sensor.

18. The actuator system of claim 16 wherein said object sensor includes a presence sensor.

19. The actuator system of claim 16 wherein said object sensor is constructed to detect a user's leaving a vicinity of a flusher being controlled by said actuator.

20. The actuator system of any one of the above claims further including a pilot body member (34,100) operatively arranged with said membrane to provide a valve seat (54, 104) for said valve passage.

21. The actuator system of claim 20 wherein said pilot body member is attached to an actuator base (32, 70) to provide a know, substantially constant distance between an external surface of said membrane and said valve seat.

22. The actuator system of claim 20 wherein said pilot body member (100) is reproducibly secured to the operator assembly and includes external threads (101), which engage complementary threads (74) in a pole piece (70), and a flange (102), which butts against a shoulder portion (76) of said pole piece (70) providing a positive stop to the pilot body member's being screwed onto the operator assembly.

23. The actuator system of any one of the above claims wherein said membrane includes a compliant region (94), and a resilient region (96) designed to be displaced said distal part of said armature and designed to come in contact with said valve seat.

24. The actuator system of claim 23 wherein said resilient region is further designed to be attached to said distal part of said armature.

25. The actuator system of claim 24 wherein said resilient region includes a C-shaped member designed for said attachment to said distal part.

26. The actuator system of any one of claims 1 through 9 constructed for controlling water flow.

27. The actuator system of claim 26 further constructed for controlling water flow in an irrigation system.

## Patentansprüche

1. Ein Aktuator- bzw. Betätigungssystem, welches folgendes aufweist: einen elektromagnetischen Aktuator einschließlich eines Ankergehäuses (14, 16, 70), aufgebaut und angeordnet zur Aufnahme eines ferromagnetischen Ankers (30, 80) innerhalb einer Ankertasche und einschließlich einer Elektromagnetspule (28), die durch Anlegen eines Spulenantriebs betätigbar ist, und **dadurch** den Anker linear bewegt;
eine bezüglich des Ankergehäuses befestigte Membran (40, 90), und zwar angeordnet zum mindestens teilweisen Umschließen eines entfernt gelegenen Teils des Ankers, wobei die Membran zur Abdichtung des Ankerströmungsmittels innerhalb der Ankertasche aufgebaut ist, wodurch der gesamte Anker von dem Ankerströmungsmittel umgeben ist, wobei die Bewegung oder Verschiebung des entfernt gelegenen Teils die Membran bezüglich eines Ventildurchlasses (44, 106) gesteuert durch den Aktuator verschiebt oder bewegt;
einen Permanentmagnet (22, 23) stationär angebracht bezüglich des Gehäuses und eine Vorspannfeder (48, 84) positioniert und angeordnet zur Vorspannung des Ankers hin zu seiner ausgefahrenen den Ventildurchlass schließenden Position, wobei der Permanentmagnet und die Feder zusammengebaut sind, um eine bistabile Verriegelungsanordnung für den Anker zu bilden;
einen Ankersensor aufgebaut zur Detektierung der Verschiebung des Ankers; und
eine Steuerschaltung (130) mit Leistung durch eine Batterie (144) versorgt und aufgebaut zum Anlegen des erwähnten Spulenantriebs an die Spule ansprechend auf eine Ausgangsgröße von dem Ankersensor, wobei die Steuerschaltung aufgebaut ist zum Anlegen des Spulenantriebs an die erwähnte Spule in einer ersten Richtung, um den Anker zu einer ersten Endposition zu bewegen und anspricht auf eine Ausgangsgröße von dem Sensor, wenn ein vorbestimmtes erstes Strombeendigungskriterium erfüllt ist, um das Anlegen des Spulenantriebs an die Spule in der ersten Antriebsrichtung zu stoppen, und wobei dann, wenn die Sensorausgangsgröße nicht das erste Strombegrenzungskriterium innerhalb einer vorbestimmten ersten Antriebsdauer erreicht, nachdem die Steuerschaltung beginnt den Spulenantrieb an die Spule in der ersten Antriebsrichtung anzulegen, die Steuerschaltung den Spulenantrieb an die Spule in der ersten Antriebsrichtung mit einem Niveau anlegt, das höher ist als das bei dem das Anlegen des Spulenantriebs an die Spule begann.

2. Betätigungssystem nach Anspruch 1, wobei das Ankerströmungsmittel ein nicht-zusammendrückbares Strömungsmittel aufweist bzw. ist und ein Korrosionsverhinderungsmittel aufweist.

3. Betätigungssystem nach Anspruch 1, wobei das Ankerströmungsmittel ein nicht-zusammendrückbares Strömungsmittel umfasst, welches im Wesentlichen aus Wasser gemischt mit einem Korrosionsverhinderungsmittel besteht.

4. Betätigungssystem nach Anspruch 1, wobei der entfernt gelegene Teil des Ankers zum Zusammendrücken der Membran gegen einen Ventilsitz (54, 104) angeordnet ist, und zwar dann, wenn der Ventildurchlass geschlossen wird, während der Anker in seiner ausgefahrenen Ankerposition angeordnet ist.

5. Betätigungssystem nach Anspruch 4, wobei ein Verhältnis zwischen 1,4 und 12,3 liegt mit der die Fläche des entfernt gelegenen Teils auf der Fläche der Membran aufliegt, und zwar einer Leitung stromaufwärts von der Membran.

6. Betätigungssystem nach einem der vorhergehenden Ansprüche, wobei der Anker einen mittleren Hohlraum (50, 82) aufweist.

7. Betätigungssystem nach Anspruch 6, wobei der mittlere Hohlraum zur Aufnahme der Vorspannfeder aufgebaut und angeordnet ist.

8. Betätigungssystem nach einem der vorhergehenden Ansprüche, wobei die Steuerschaltung einen Mikrokontroller (136) aufweist.

9. Betätigungssystem nach Anspruch 8, wobei die Steuerschaltung einen Komparator (134, 140) aufweist, und zwar aufgebaut zum Liefern eines Signals an den Mikrokontroller.

10. Betätigungssystem nach Anspruch 1, wobei die Steuerschaltung aufgebaut ist zum Anlegen des Spulenantriebs an die Spule in einer zweiten Richtung, die entgegengesetzt zur ersten Richtung liegt, und daher die Tendenz hat den Anker zu einer zweiten Endposition zu treiben; wobei der Sensor derart mit dem Aktuator gekoppelt ist, dass er das Erreichen der zweiten Endposition durch den Anker abfühlt; und wobei schließlich die Steuerschaltung betätigbar ist, um das Anlegen des Spulenantriebs an die Spule in der zweiten Antriebsrichtung zu beginnen und wobei die Steuerschaltung ferner anspricht darauf, dass die Sensorausgangsgröße ein vorbestimmtes zweites Strombeendigungskriterium erfüllt, um das Anlegen des Spulenantriebs an die Spule in der zweiten Antriebsrichtung zu stoppen.

11. Betätigungssystem nach Anspruch 10, wobei die ersten und zweiten Strombeendigungskriterien sich unterscheiden.

12. Betätigungssystem nach Anspruch 10, wobei dann, wenn die Sensorausgangsgröße das zweite Strombeendigungskriterium nicht innerhalb einer vorbestimmten zweiten Antriebsdauer erreicht nachdem die Steuerschaltung anfängt, den Spulenantrieb an die Spule in der zweiten Antriebsrichtung anzulegen, die Steuerschaltung den Spulenantrieb an die Spule in der zweiten Antriebsrichtung anlegt, und zwar mit einem Pegel oder Niveau höher als das bei dem das Anlegen des Spulenantriebs an die Spule begann.

13. Betätigungssystem nach einem der Ansprüche 1 bis 9, wobei der Ankersensor einen piezoelektrischen Wandler (110) umfasst.

14. Betätigungssystem nach einem der Ansprüche 1 bis 9, wobei der Ankersensor einen optischen Sensor aufweist.

15. Betätigungssystem nach einem der Ansprüche 1 bis 9, wobei der Ankersensor einen Detektor von elektromagnetischer Strahlung aufweist.

16. Betätigungssystem nach einem der Ansprüche 1 bis 9, wobei die Steuerschaltung betriebsmäßig mit einem Objektsensor (138) verbunden ist.

17. Betätigungssystem nach Anspruch 16, wobei der Objektsensor einen Bewegungssensor umfasst.

18. Betätigungssystem nach Anspruch 16, wobei der Objektsensor einen Anwesenheitssensor umfasst.

19. Betätigungssystem nach Anspruch 16, wobei der Objektsensor aufgebaut ist zum Detektieren des Verlassens eines Benutzers einer Nachbarschaft einer Spülvorrichtung, die durch den Betätiger gesteuert wird.

20. Betätigungssystem nach einem der vorhergehenden Ansprüche, wobei ferner ein Pilotkörperglied (34, 100) vorgesehen ist, und zwar betriebsmäßig angeordnet mit der erwähnten Membran, um einen Ventilsitz (54, 104) für den Ventildurchlass vorzusehen.

21. Betätigungssystem nach Anspruch 20, wobei das Pilotkörperglied an einer Betätigungsvorrichtungs- oder Aktuatorbasis (32, 70) angebracht ist, um einen bekannten im wesentlichen konstanten Abstand vorzusehen, und zwar zwischen einer externen Oberfläche der Membran und dem Ventilsitz.

22. Betätigungssystem nach Anspruch 20, wobei das Pilotkörperglied (100) in reproduzierbarer Weise an der Betätigeranordnung befestigt ist und ein Außengewinde (101) aufweist, welches mit komplementären Gewindegängen (74) in einem Polstück (70) in Eingriff steht, und ferner mit einem Flansch (102) der gegen einen Schulterteil (76) des Polstücks (70) anschlägt und einen positiven Anschlag für das Pilotkörperglied bildet, welches auf die Betätigeranordnung aufgeschraubt wird.

23. Betätigungssystem nach einem der vorhergehenden Ansprüche, wobei die Membran eine nachgiebige Zone (94) aufweist, ferner eine elastische Zone (96), und zwar ausgelegt zur Versetzung oder Bewegung des entfernt gelegenen Teils des Ankers und ausgelegt, um in Kontakt mit dem Ventilsitz zu kommen.

24. Betätigungssystem nach Anspruch 23, wobei die elastische Zone ferner derart ausgelegt ist, dass sie an dem entfernt gelegenen Teil des Ankers angebracht werden kann.

25. Betätigungssystem nach Anspruch 24, wobei die elastische Zone ein C-förmiges Glied aufweist, und zwar ausgelegt zur Anbringung an dem entfernt gelegenen Teil.

26. Betätigungssystem nach einem der Ansprüche 1 bis 9 aufgebaut zur Steuerung eines Wasserflusses.

27. Betätigungssystem nach einem der Ansprüche 26, und zwar ferner aufgebaut zur Steuerung des Wasserflusses in einem Bewässerungssystem.

## Revendications

1. Système d'actionneur comprenant :
un actionneur électromagnétique comprenant un boîtier d'armature (14, 16, 70) conçu et agencé pour recevoir une armature ferromagnétique (30, 80) dans une poche d'armature et comprenant un enroulement de solénoïde (28) actionnable par l'application d'une excitation d'enroulement et d'où il résulte un déplacement linéaire de l'armature ;
une membrane (40, 90) fixée sur le boîtier d'armature et agencée pour enfermer au moins partiellement une partie distale de l'armature, la membrane étant conçue pour bloquer de façon étanche un fluide d'armature dans la poche d'armature, l'armature complète étant ainsi entourée par le fluide d'armature, un déplacement de la partie distale déplaçant la membrane par rapport à un passage de soupape (44, 106) contrôlé par l'actionneur ;
un aimant permanent (22, 23) monté de façon fixe sur le boîtier et un ressort de sollicitation (48, 84) disposé et agencé pour solliciter l'armature vers sa position étendue fermant le passage de soupape, l'aimant permanent et le ressort étant assemblés pour assurer un montage bistable à verrouillage pour l'armature ;
un capteur d'armature conçu pour détecter un déplacement de l'armature ; et
un circuit de commande (130), alimenté par une batterie (144), conçu pour appliquer l'excitation d'enroulement à l'enroulement en réponse à un signal de sortie provenant du capteur d'armature,
dans lequel le circuit de commande est conçu pour appliquer l'excitation d'enroulement à l'enroulement dans une première direction pour déplacer l'armature vers une première position d'extrémité et est sensible au fait qu'un signal sortant du capteur satisfait un premier critère prédéterminé de terminaison de courant pour stopper l'application de l'excitation d'enroulement à l'enroulement dans la première direction d'excitation, et dans lequel, si le signal sortant du capteur ne satisfait pas le premier critère de terminaison de courant au bout d'une première durée d'excitation prédéterminée après le début de l'application par le circuit de commande de l'excitation d'enroulement à l'enroulement dans la première direction d'excitation, le circuit de commande applique une excitation d'enroulement à l'enroulement dans la première direction d'excitation à un niveau supérieur à celui avec lequel il a commencé l'application de l'excitation d'enroulement à l'enroulement.

2. Système d'actionneur selon la revendication 1, dans lequel le fluide d'armature comprend un fluide incompressible comprenant un inhibiteur de corrosion.

3. Système d'actionneur selon la revendication 1, dans lequel le fluide d'armature comprend un fluide incompressible et est constitué essentiellement d'eau mélangée à un inhibiteur de corrosion.

4. Système d'actionneur selon la revendication 1, dans lequel la partie distale de l'armature est agencée pour comprimer la membrane contre un siège de soupape (54, 104) lors de la fermeture du passage de soupape tandis que l'armature est placée dans sa position d'armature étendue.

5. Système d'actionneur selon la revendication 4, dans lequel le rapport entre la surface que supporte la partie distale et la surface de la membrane exposée à un conduit en amont de la membrane est compris entre 1,4 et 12,3.

6. Système d'actionneur selon l'une quelconque des revendications précédentes, dans lequel l'armature comprend une cavité centrale (50, 82).

7. Système d'actionneur selon la revendication 6, dans lequel la cavité centrale est conçue et agencée pour recevoir le ressort de sollicitation.

8. Système d'actionneur selon l'une quelconque des revendications précédentes, dans lequel le circuit de commande comprend un microcontrôleur (136).

9. Système d'actionneur selon la revendication 8, dans lequel le circuit de commande comprend un comparateur (134, 140) conçu pour fournir un signal au microcontrôleur.

10. Système d'actionneur selon la revendication 1, dans lequel le circuit de commande est conçu pour appliquer l'excitation d'enroulement à l'enroulement dans une deuxième direction, opposée à la première direction, et par cela pour tendre à entraîner l'armature vers une deuxième position d'extrémité ; le capteur est ainsi couplé à l'actionneur de façon à détecter le fait que l'armature atteint la deuxième position d'extrémité ; et le circuit de commande est actionnable pour commencer l'application de l'excitation d'enroulement à l'enroulement dans la seconde direction d'excitation et, en réponse au fait que la sortie du capteur satisfait un deuxième critère prédéterminé de terminaison de courant, pour arrêter l'application de l'excitation d'enroulement à l'enroulement dans la deuxième direction d'excitation.

11. Système d'actionneur selon la revendication 10, dans lequel les premier et deuxième critères de terminaison de courant sont différents.

12. Système d'actionneur selon la revendication 10, dans lequel, si la sortie du capteur ne satisfait pas le deuxième critère de terminaison de courant dans une deuxième durée d'excitation prédéterminée après le début de l'application par le circuit de commande de l'excitation d'enroulement à l'enroulement dans la deuxième direction d'excitation, le circuit de commande applique une excitation d'enroulement à l'enroulement dans la deuxième direction d'excitation à un niveau supérieur à celui avec lequel il a commencé l'application de l'excitation à l'enroulement.

13. Système d'actionneur selon l'une quelconque des revendications 1 à 9, dans lequel le capteur d'armature comprend un transducteur piézoélectrique (110).

14. Système d'actionneur selon l'une quelconque des revendications 1 à 9, dans lequel le capteur d'armature comprend un capteur optique.

15. Système d'actionneur selon l'une quelconque des revendications 1 à 9, dans lequel le capteur d'armature comprend un détecteur de rayonnement électromagnétique.

16. Système d'actionneur selon les revendications 1 à 9, dans lequel le circuit de commande est connecté fonctionnellement à un détecteur d'objet (138).

17. Système d'actionneur selon la revendication 16, dans lequel le détecteur d'objet comprend un capteur de mouvement.

18. Système d'actionneur selon la revendication 16, dans lequel le détecteur d'objet comprend un détecteur de présence.

19. Système d'actionneur selon la revendication 16, dans lequel le détecteur d'objet est conçu pour détecter le fait qu'un utilisateur quitte le voisinage d'une chasse d'eau commandée par l'actionneur.

20. Système d'actionneur selon l'une quelconque des revendications précédentes, comprenant en outre un élément de corps pilote (34, 100) agencé fonctionnellement avec la membrane pour assurer un siège de soupape (54, 104) pour le passage de soupape.

21. Système d'actionneur selon la revendication 20, dans lequel l'élément de corps pilote est fixé à une base d'actionneur (32, 70) pour assurer une distance connue et sensiblement constante entre une surface externe de la membrane et le siège de soupape.

22. Système d'actionneur selon la revendication 20, dans lequel l'élément de corps pilote (100) est fixé de façon reproductible à l'ensemble opérateur, et comprend un filetage externe (101) qui contacte un filetage complémentaire (74) dans une pièce polaire (70) et un rebord (102), qui butte contre une partie d'épaulement (76) de la pièce polaire (70) assurant une butée positive à l'élément de corps pilote qui est vissé sur l'ensemble opérateur.

23. Système actionneur selon l'une quelconque des revendications précédentes, dans lequel la membrane comprend une région souple (94), et une région élastique (96) conçue pour être déplacée par la partie distale de l'armature et conçue pour venir en contact avec le siège de soupape.

24. Système d'actionneur selon la revendication 23, dans lequel la région élastique est en outre conçue pour être fixée à la partie distale de l'armature.

25. Système d'actionneur selon la revendication 24, dans lequel la région élastique comprend un élément en forme de C conçu pour la fixation à la partie distale.

26. Système d'actionneur selon l'une quelconque des revendications 1 à 9, conçu pour commander l'écoulement d'eau.

27. Système d'actionneur selon la revendication 26, conçu en outre pour commander l'écoulement d'eau dans un système d'irrigation.
